Europäisches Patentamt

European Patent Office

Office européen des brevets

(11) Publication number: **0 022 646**
**A1**

(12) # EUROPEAN PATENT APPLICATION

(21) Application number: **80302288.8**

(22) Date of filing: **04.07.80**

(51) Int. Cl.³: **F 24 D 3/00**

(30) Priority: **17.07.79 GB 7924824**
**07.12.79 GB 7942404**

(43) Date of publication of application: **21.01.81**
**Bulletin 81/3**

(84) Designated Contracting States: **AT BE CH DE FR GB IT LI LU NL SE**

(71) Applicant: **WIRSBO BRUKS AKTIEBOLAG,**
**S-730 61 Wirsbo (SE)**

(72) Inventor: **Skaarud, Roland, Ringduvegatan 137,**
**S-724 70 Vaesteraas (SE)**
Inventor: **Stensson, Sten-Ove, S-730 61 Wirsbo (SE)**
Inventor: **Axelsson, Kurt, S-730 61 Wirsbo (SE)**

(74) Representative: **Evans, David Charles et al, F.J.**
**CLEVELAND & COMPANY 40-43, Chancery Lane,**
**London, WC2A 1JQ (GB)**

(54) **Surface heating system and panel unit therefor.**

(57) The invention relates to a surface heating system comprising a plurality of spaced supports, one or more panels (12) formed of a heat conducting material to define a heating surface and conduit formed of a cross-linked polyolefinic material. Each panel (12) is configured to provide at least one pipe accommodating recess (13) and at least one abutment portion (17) extending in substantially spaced parallel relationship with said recess to define a portion (16) transverse to the plane of the sheet adapted to abut or engage one of said supports, wherein the opening of the pipe accommodating recess (13) is on the surface of said sheet towards the surface to be heated.

The present invention relates to surface heating systems. Surface heating systems, at the present time are generally well known in the form of the familiar floor heating system. At the present time a floor heating system is laid down by providing a floor base and then laying a serpentine pattern of heating pipes thereon and covering the pipes so laid with a concrete screed. This system works well enough provided the temperature of the heating fluid is sufficiently above the ambient temperature of the room to be heated. The system works by the pipes heating the concrete overlay which in turn releases heat into the room.

The disadvantages, however, are that the heat capacity of the concrete overlay is quite high, so that there is a slow reaction to external influences and secondly, the complexity of the system is such that two separate trades are involved in laying the system namely the plumber laying and supporting the pipes and connecting them up and the builder laying the cement overlay. Furthermore, a period of 4 to 6 weeks is necessary for the cement to cure sufficiently before the heating system can be tested.

With the advent of the cross-linked polyethylenic pipe, a floor heating system can be contemplated using a continuous pipe which may now be run from a heating boiler

through a floor heating system and back thereto without intermediate joins.

In view of the increasing cost of energy, there is a considerable pressure to increase the extraction of heat from low temperature sources such, for example, as solar energy, and heat pumps. These sources can only provide practical heat supplies in a situation where the maximum temperature of the heating fluid is likely to be of the order of $27^{\circ}$ to $35^{\circ}$C, that is to say, only a low temperature difference between the heating fluid and the temperature of the space to be heated. With such small temperature differences, the traditional floor heating system would simply not provide an adequate heating system.

Accordingly, it is necessary to look at means for obtaining the maximum heating potential with the lowest heat capacity of the system employed.

According to the present invention there is provided a panel formed of a sheet of heat conducting material and configured to provide at least one pipe accommodating recess and at least one abutment portion extending substantially in spaced parallel relationship with said recess to define a portion transverse to the plane of the sheet adapted to abut or engage a support for said panel wherein the opening of the pipe accommodating recess is on the surface of said sheet towards the surface to be heated.

The invention also includes a surface heating system comprising a plurality of spaced supports, one or more panels in accordance with the invention formed of a heat conducting material to define a heating surface and a conduit formed of a cross-linked polyolefinic material.

The panel may include bias means for retaining said panel in juxtaposition with said spaced supports.

It is preferred that the panel is formed from an aluminium sheet to provide a central recess for the conduit. The recess is preferably less than the diameter of the conduit so that the relative flexibility or resilience of the shaped aluminium sheet yields as the conduit is pressed into the recess and returns under its resilience to retain the conduit therein.

The surface to carry the heating system may preferably have a plurality of spaced supports constituted by battens disposed in spaced parallel relationship. The conduit support may be fluted to provide the abutment surface which engages with an edge of an adjacent batten. The fluted portion may have a longitudinal edge flange constituting a support portion adapted to overlay said batten and securing means, such, for example, as staples or nails, may be driven into the overlaying flange to maintain the panel in place.

The depth of the batten should be sufficient to maintain the conduit and conduit support member spaced from the surface from which the structure stands. It is then possible to provide a simple overlay of a floor cladding material over the batten to complete a floor or indeed a wall or ceiling system. Insulating may be provided on the side of the panel away from the surface to be heated.

Following is a description by way of example only and with reference to the accompanying formal drawings of one embodiment in accordance with the present invention.

Figure 1 is a section through a panel in accordance with the present invention;

Figure 2 is a plan view of the panel of Figure 1;

Figure 3 is a section through a floor system in accordance with the present invention;

Figure 4 shows the system applied to a wall; and

Figure 5 is an alternative configuration of the panel of Figure 1.

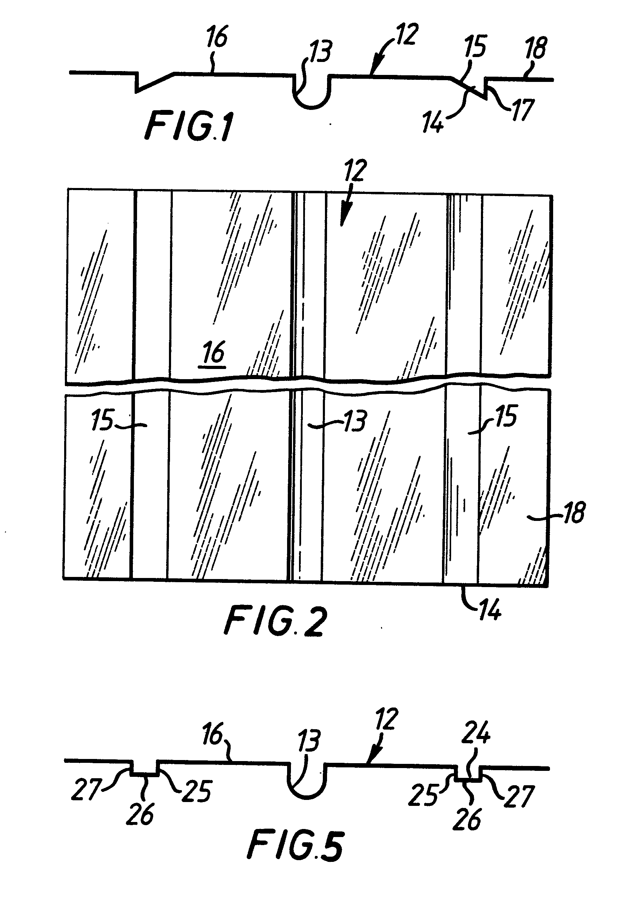

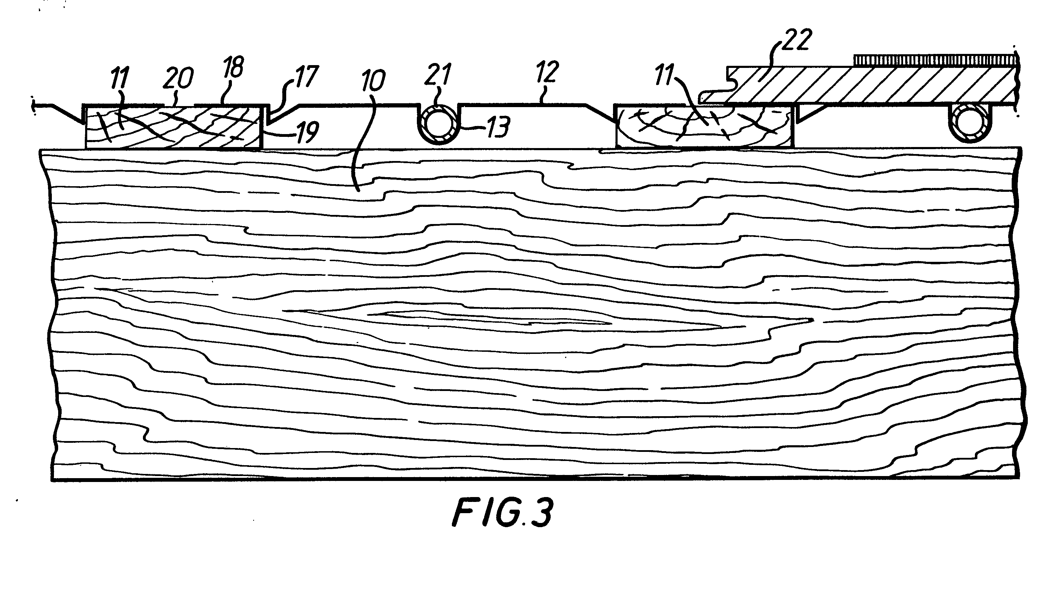

Referring first to Figure 3, a typical floor system comprises a laterally extending joist 10 carrying a plurality of battens 11 extending across the joist substantially perpendicular thereto. The spacing between each joist accommodates a panel 12 having a central pipe accommodating recess 13 and outwardly thereof a longitudinal extending fluting 14 comprising an inclined recess portion 15 extending downwardly from an outer surface 16 and having an abutment surface 17 substantially perpendicular to outer surface 16 and having an abutment surface 17 substantially perpendicular to outer surface 16. The fluting 14 has outwardly thereof a longitudinally extending flange 18 substantially coplanar with outer surface 16 of panel 12 (See Figure 1).

In the embodiment of Figure 5 the panel 12 has a pipe accommodating recess 13 as before; the fluting 14 is replaced by a longitudinally extending trough 24 each trough being formed by a first portion 25 substantially perpendicular to the plane of outer surface 16, a second portion 26 at right angles to the first portion and a third portion 27 in spaced parallel relationship with said first portion, so that said first portion 25 and/or said third portion 27 is adapted to abut or engage with an adjacent support.

The panel 12 is disposed between adjacent battens 11 in spaced parallel relationship therewith and is located therebetween by means of abutment surfaces 17 juxtaposed the corresponding longitudinal edge 19 of an adjacent batten. The flange 18 overlaying the upper surface 20 of the batten 11.

A pipe 21 formed of a cross-linked polyethylenic material is pressed into the recess 13 for accommodation therein and the floor covering 22 is then applied over this system to complete this construction.

The member 12 is formed of aluminium sheet having a thickness of 0.5 to 0.7 millimetres and preferably 0.6 millimetres and serves to distribute heat from the conduit 21.

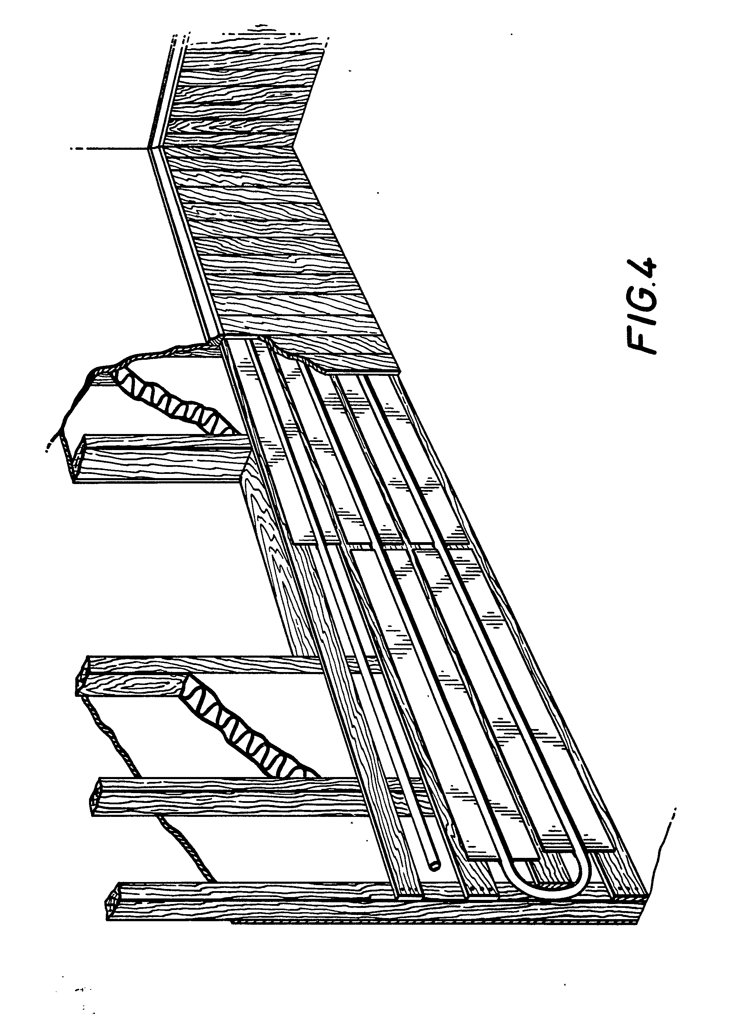

In operation it has been found that such a system is readily assembled. Where used in a wall or ceiling system (see Figure 4) staples or like securing means may be driven into flanges 18 to secure the panel 12 to the battens 11.

In this way a large heating surface may be employed thereby enabling a low temperature heating fluid to be circulated within the pipes to effect the heating of the room or like area. In this way low temperature heating water may be employed using a heat source such as a heat pump, or solar energy.

A further advantage is that such a system can be readily installed into an existing house. The total depth of such an installation is under 3 centimetres. Thus, the relative rise in floor level would be comparatively small compared with the 8 or 10 centimentres necessary for a pipe having a concrete overlay.

CLAIMS

1.  A panel formed of a sheet of heat conducting material and configured to provide at least one pipe accommodating recess and at least one abutment portion extending substantially in spaced parallel relationship with said recess to define a portion transvers to the plane of the sheet adapted to abut or engage a support for said panel wherein the opening of the pipe accommodating recess is on the surface of said sheet towards the surface to be heated.

2.  A panel as claimed in claim 1 wherein the abutment portion is formed by a bend in the sheet.

3.  A panel as claimed in claim 1 or claim 2 wherein the recess is dimensioned such that a pipe is a press fit therein.

4.  A panel as claimed in any preceding claim wherein the abutment portion is defined by a trough formed by a first portion substantially perpendicular to the plane of said sheet, a second portion at right angles to the first portion and a third portion in spaced parallel relationship with said first portion wherein said first and/or third portion is adapted to abut or engage a support for said panel.

5. A panel as claimed in any one of claims 1 to 3 wherein the abutment portion is defined by a first portion at an acute angle to the plane of the sheet and a second portion perpendicular to said plane.

6. A panel as claimed in any preceding claim including a support portion in the plane of the sheet and extending outwardly of said second portion, said support portion being adapted to contact a joist or other support.

7. A panel as claimed in any preceding claim wherein an abutment portion is disposed on each side of said recess.

8. A panel as claimed in claim 7 wherein the sheet material has a flexibility and resilience sufficient to take up inconsistences in the spacing of the support.

9. A panel as claimed in any preceding claim wherein the sheet material is a metal sheet.

10. A panel as claimed in claim 1 and substantially as herein described with reference to and as illustrated in the accompanying drawings.

11. A surface heating system comprising a plurality of spaced supports defining a surface to be heated, one or more panels as claimed in any preceding claim and a conduit formed of a cross linked polyolefinic material disposed in the pipe accommodating recess thereof.

0022646

FIG.1

FIG.2

FIG.5

0022646

FIG.3

FIG.4

3/3

0022646

| | **DOCUMENTS CONSIDERED TO BE RELEVANT** | | CLASSIFICATION OF THE APPLICATION (Int. Cl.3) |
|---|---|---|---|
| Category | Citation of document with indication, where appropriate, of relevant passages | Relevant to claim | |
| | CH – A – 293 046 (HAUPT) <br> * fig. 3, positions 4, 6; <br> page 2, lines 50 to 61; <br> fig. 3; page 2, lines 77 and 78 * <br> -- | · 1,6,7, 9 | F 24 D  3/00 |
| | CH – A – 298 442 (ALLENSPACH) <br> * pages 3, lines 10 to 21 * <br> -- | 3 | |
| | DE –A1 – 2 624 871 (DÜRST) <br> * fig. 1 * <br> ---- | 11 | **TECHNICAL FIELDS SEARCHED (Int.Cl.3)** <br><br> F 24 D  3/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | |
|---|---|
| **X** The present search report has been drawn up for all claims | |

| Place of search | Date of completion of the search | Examiner |
|---|---|---|
| Berlin | · 13-10-1980 | PIEPER |

EPO Form 1503.1  06.78